Europäisches Patentamt

European Patent Office

Office européen des brevets

(19)

(11)    EP 0 999 953 B1

(12)    **EUROPÄISCHE PATENTSCHRIFT**

(45) Veröffentlichungstag und Bekanntmachung des Hinweises auf die Patenterteilung:
**12.02.2003  Patentblatt 2003/07**

(51) Int Cl.⁷: **H02P 9/14**, B60R 16/02, H02J 7/14

(21) Anmeldenummer: **98933529.4**

(22) Anmeldetag: **14.05.1998**

(86) Internationale Anmeldenummer:
**PCT/DE98/01339**

(87) Internationale Veröffentlichungsnummer:
**WO 99/006241 (11.02.1999 Gazette 1999/06)**

(54) **VERFAHREN UND VORRICHTUNG ZUR REGELUNG EINES VON EINER BRENNKRAFTMASCHINE ANTREIBBAREN GENERATORS**

METHOD AND DEVICE FOR REGULATING A GENERATOR CAPABLE OF BEING DRIVEN BY AN INTERNAL COMBUSTION ENGINE

PROCEDE ET APPAREIL POUR REGULER UN GENERATEUR POUVANT ETRE ENTRAINE PAR UN MOTEUR A COMBUSTION INTERNE

(84) Benannte Vertragsstaaten:
**DE ES FR GB IT SE**

(30) Priorität: **01.08.1997  DE 19733212**

(43) Veröffentlichungstag der Anmeldung:
**17.05.2000  Patentblatt 2000/20**

(73) Patentinhaber: **ROBERT BOSCH GMBH
70442 Stuttgart (DE)**

(72) Erfinder: **SCHENK, Robert
D-71665 Vainingen/Enz (DE)**

(56) Entgegenhaltungen:
**EP-A1- 0 462 503          EP-A2- 0 777 309
WO-A1-90/07217          DE-A1- 3 743 317**

Printed by Jouve, 75001 PARIS (FR)

**Beschreibung**

Die Erfindung geht aus von einem Verfahren zur Regelung eines von einer Brennkraftmaschine antreibbaren Generators, insbesonders eines Drehstromgenerators in einem Kraftfahrzeug nach der Gattung des Hauptanspruchs.

Stand der Technik

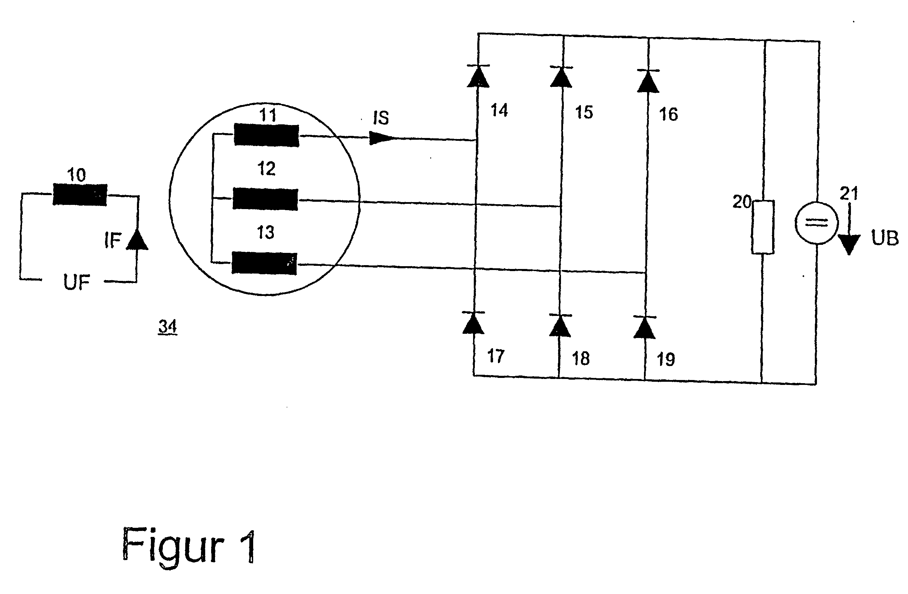

Zur Erzeugung der im Kraftfahrzeug benötigten elektrischen Energie werden heute üblicherweise Klauenpolgeneratoren eingesetzt. Diese Klauenpolgeneratoren sind Drehstromgeneratoren, deren Ausgangsstrom mit Hilfe einer Diodenbrücke gleichgerichtet wird und zur Versorgung der elektrischen Verbraucher des Fahrzeugs sowie zur Ladung der Batterie verwendet wird. In Figur 1 sind die wesentlichsten Bestandteile eines Drehstromgenerators dargestellt. Die Erregerspule 10, die auch als Feldspule bezeichnet wird, wird vom Erregerstrom bzw. Feldstrom IF durchflossen. Die Spannung an der Erregerspule 10 ist die Feldspannung UF.

Aufgrund des durch die Erregerspule 10 fließenden Stromes wird in den Statorspulen 11, 12, 13 ein Magnetfeld induziert. In den Statorspulen entsteht durch die Plußänderung eine induzierte Spannung, die einen strom IS durch die Dioden 14 bis 19 in das Bordnetz treibt. Dieser Strom wird zur Versorgung der Verbraucher 20 sowie der Batterie 21 verwendet. Die Batteriespannung ist mit UB bezeichnet. Der Stromfluß durch die Feldwicklung 10 wird üblicherweise mit Hilfe eines hier nicht dargestellten Spannungsreglers geregelt, so daß sich am Ausgang des Generators die gewünschte Spannung einstellt. Als Generator 34 wird üblicherweise das Gesamtsystem mit der Erregerspule 10 und den Statorspulen 11 bis 13 bezeichnet.

Mit einem Generator sowie der zugehörigen Gleichrichterschaltung wie sie in Figur 1 dargestellt ist, beginnt eine Leistungsabgabe erst nach Erreichen einer bestimmten Drehzahl. Diese Drehzahl ist von der Dimensionierung des Generators, insbesonders von den Ausgestaltungen der Statorspulen abhängig. Die Drehzahl, ab der der Generator Leistung abgibt, bzw. die Drehzahl, bei der ein Stromfluß einsetzt, ist die sogenannte Einschaltdrehzahl nE.

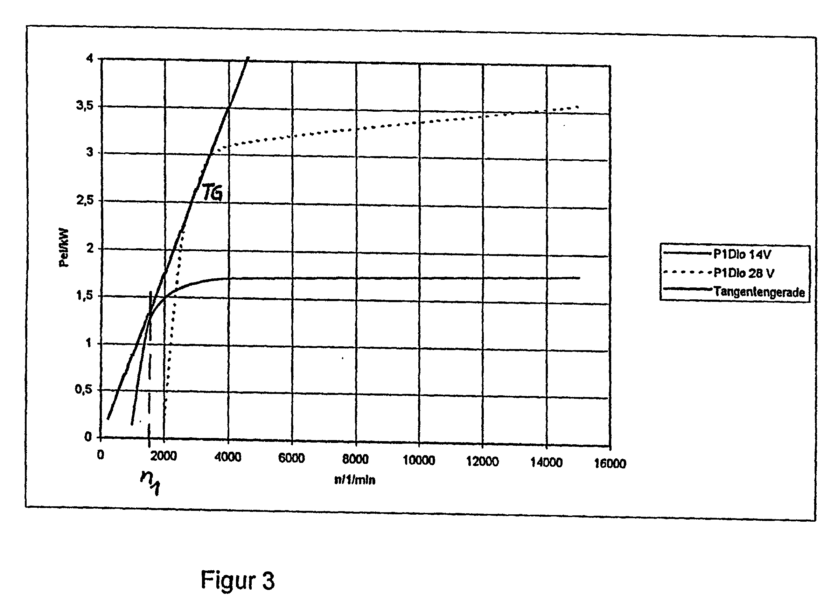

Der Zusammenhang zwischen der vom Generator abgegebenen Leistung Pe in kW und der Generatordrehzahl n in Umdrehungen pro Minute ist in Figur 3 für einen herkömmlichen Generator dargestellt. Die untere (durchgezogene) Kurve gilt für eine Ausgangsspannung von 14V, die obere (gestrichelte) für eine Ausgangsspannung von 28V. Zusätzlich ist die sogenannte Tangentengerade TG eingetragen. Der Tangentenpunkt liegt bei 14V Ausgangsspannung bei einer Generatordrehzahl von n1 gleich ca. 1500/min. Die Berechnung der Leistungsabgabe in Abhängigkeit von der Drehzahl für die Ausgangsspannungen 14V und 28V, die in Figur 3 angegeben sind, wurden mit konstanten Parametern durchgeführt. Im einzelnen wurden folgende Parameter gewählt:

| Stator Streuinduktivität | 19μH |
| Stator Querinduktivität | 47μH |
| Stator Längsinduktivität | 77μH |
| Stator Widerstand | 12mΩ |
| Erregerstrom | 3,5A |

Die Dioden und Schalter wurden n als ideale Bauelement vorausgesetzt. Alle Berechnungen wurden an Zeigerdiagrammen durchgeführt.

Wie Figur 3 zu entnehmen ist, liefert ein herkömmlicher Drehstromgenerator bei Drehzahlen, die unter 1500 Umdrehungen pro Minute liegen, nur eine geringe Leistung. Bei solch kleinen Drehzahlen kann der Generator nur einen sehr geringen Strom abgeben. Damit ein Stromfluß einsetzt, müssen die Augenblickswerte der gleichgerichteten Generatorspannung größer sein als die Bordnetzspannung. Nur unter dieser Voraussetzung kann der Generator überhaupt einen (nennenswerten) Strom liefern. Mit zunehmender Drehzahl steigt die von der Erregerspule 10 in den Statorwicklungen 11, 12 und 13 induzierte Spannung, die als Polradspannung bezeichnet wird, an. Entsprechend nimmt mit zunehmender Drehzahl auch der Generatorstrom zu. Bei hoher Drehzahl ist die Klemmenspannung, die am Ausgang der Statorspulen entsteht, gegenüber der Polradspannung sehr klein, so daß der Generator nahezu im Kurzschluß betrieben wird. Die Leistungsabgabe ist aus diesen Gründen mit zunehmender Drehzahl nur noch unwesentlich steigerbar.

Im Kurzschlußpunkt kann die Leistungsabgabe des Generators beträchtlich erhöht werden, indem die Bordnetzspannung angehoben wird. Die Leistungsabgabe bei verdoppelter Spannung, also bei 28V Ausgangsspannung am Generator ist für hohe Drehzahlen etwa doppelt so hoch wie bei 14V Generatorspannung. Die Verdoppelung der abgegebenen Leistung wird erzielt, da wieder der Kurzschlußstrom erreicht wird. Anstelle einer Verdoppelung der Generatorspannung führt auch eine Halbierung der Windungszahl zu einer Verdoppelung des abgegebenen Stromes und damit zur Leistungsverdoppelung. Magnetisch ergeben sich im Generator durch die beiden Verfahren gleiche Zustände. Es sollen daher die im folgenden angestellten Betrachtungen nur für ein Verfahren erläutert werden, nämlich für die Spannungsverdoppelung bei ungeänderter Windungszahl.

Wie bereits ausgeführt, führt eine Verdoppelung der Generatorspannung bei hohen Drehzahlen zu einer beträchtlichen Leistungssteigerung. Bei kleinen Generatordrehzahlen führt die Spannungserhöhung jedoch zu einem Nachteil. Die Einschaltdrehzahl, ab der Strom abgegeben wird, nE ist proportional zur Batteriespannung. Bei Erhöhung der Batteriespannung wird sich demzufolge auch die Einschaltdrehzahl erhöhen und bei kleinen Generatordrehzahlen wird keine Leistung abgegeben. Da herkömmliche Generatoren für Drehzahlen von ca. 1800 bis 6000 Umdrehungen/min auszulegen sind, können sich im unteren Drehzahlbereich Probleme ergeben. Der Tangentenpunkt ergibt sich als Berührungspunkt der Generatorkennlinie, darunter versteht man die Kennlinie Generatorleistung über Generatordrehzahl, mit einer möglichst steilen Ursprungsgeraden. Wie Figur 3 zu entnehmen ist, liegt der Tangentenpunkt bei einfacher Batteriespannung bei etwa 1500 Umdrehungen/min. Da die Tangentenpunkte für verschiedene Batteriespannungen auf einer Geraden liegen, ergibt sich, daß bei doppelter Batteriespannung der Tangentenpunkt bei einer doppelt so hohen Drehzahl n2 erreicht wird. Bei der Drehzahl n1 ist die Leistungsabgabe dieses Generators bei 28V gleich Null (siehe Figur 3).

Da teilweise sogar noch kleinere Drehzahlen als 1800 Umdrehungen/min als Generatorbetriebsdrehzahl zugelassen werden sollen, müßte die Batteriespannung abgesenkt werden, um den Tangentenpunkt zu niedrigeren Drehzahlen zu verschieben. Alternativ könnte auch die Windungszahl erhöht werden. In beiden Fällen sinkt jedoch die maximale Generatorleistung, daher sind solche Generatoränderungen nicht möglich. Im Gegensatz dazu sollten künftige Generatoren mehr Leistung bringen. Bei geforderten Leistungen von über 5kW müßten die Generatoren vergrößert werden. Da die Klauengeometrie jedoch wegen der Drehzahlfestigkeit keine Verlängerung der Klauen zuläßt und auch eine Steigerung des Statorbohrungsdurchmessers nicht möglich ist, wird derzeit vorgeschlagen, Doppelgeneratoren einzusetzen, die aber aufwendig sind und den Nachteil eines relativ hohen Trägheitsmomentes aufweisen.

Eine andere bekannte Möglichkeit zur Leistungssteigerung besteht darin, die Klemmenspannung des Generators jeweils an die Erfordernisse anzupassen. Dieser Weg wird auch als Generatorbetrieb bei freier Spannung bezeichnet. Der Generator arbeitet dann auf einen Kondensator und ein Gleichspannungswandler transformiert die Leistung in das Bordnetz und stabilisiert dabei dessen Spannung auf beispielsweise 14V. Durch Wahl einer geeigneten Spannung für die jeweilige Drehzahl kann der Generator bei jeder Drehzahl am Tangentenpunkt arbeiten. Für Drehzahlen, die größer sind als die Drehzahl am Tangentenpunkt n1 bei 14V bzw. n2 bei 28V ist die Kondensatorspannung größer als die Bordnetzspannung zu wählen. Der Gleichspannungswandler, der die Kondensatorspannung in die Bordnetzspannung wandelt, muß also als Tiefsetzsteller arbeiten und die Spannung von höheren zu tieferen Werten wandeln. Für Drehzahlen, die kleiner sind als die jeweilige Drehzahl $n_1$ bzw. $n_2$ müßte der Gleichspannungswandler als Hochsetzsteller arbeiten. Es ist also ein Gleichspannungswandler einzusetzen, der die kleine Kondensatorspannung in die höhere Bordnetzspannung wandelt.

Diese bekannte Lösung mit der variablen Generatorspannung vereint die Vorteile der beiden Batteriespannungen nach Figur 3, da beide Tangentenpunkte angefahren werden können. Bei hoher Drehzahl erreicht man also eine hohe Leistungsabgabe, während bei der Drehzahl n1 auch noch nennenswerte Leistung abgegeben werden kann.

Ein Generator, bei dem mit höherer Spannung gearbeitet werden kann und der einen Kondensator aufweist, dessen Spannung mit Hilfe eines Spannungswandlers verändert werden kann, ist aus der DE-P 196 460 43 bekannt. Der Nachteil einer solchen Lösung, die mit einem Generator, einem Zwischenkreiskondensator und einem Spannungswandler arbeitet, ist die Verkettung der Wirkungsgrade, die zu einer Verschlechterung des Gesamtwirkungsgrades des Systems führt. Beispielsweise muß der Tiefsetzsteller für einen weiten Spannungsbereich ausgelegt werden, wodurch die Optimierung erschwert wird. 90% Wirkungsgrad stellen eine obere Grenze dar. Der Generator kann in einem solchen Betrieb Wirkungsgrade bis zu 80% erreichen, der Gesamtwirkungsgrad liegt somit nur noch bei 70%. Ein weiterer Nachteil dieser bekannten Lösung ist, daß der Tiefsetzsteller groß, teuer und schwer ist, da er mehrere Leistungsschalter sowie Kondensatoren und eine Spule umfaßt.

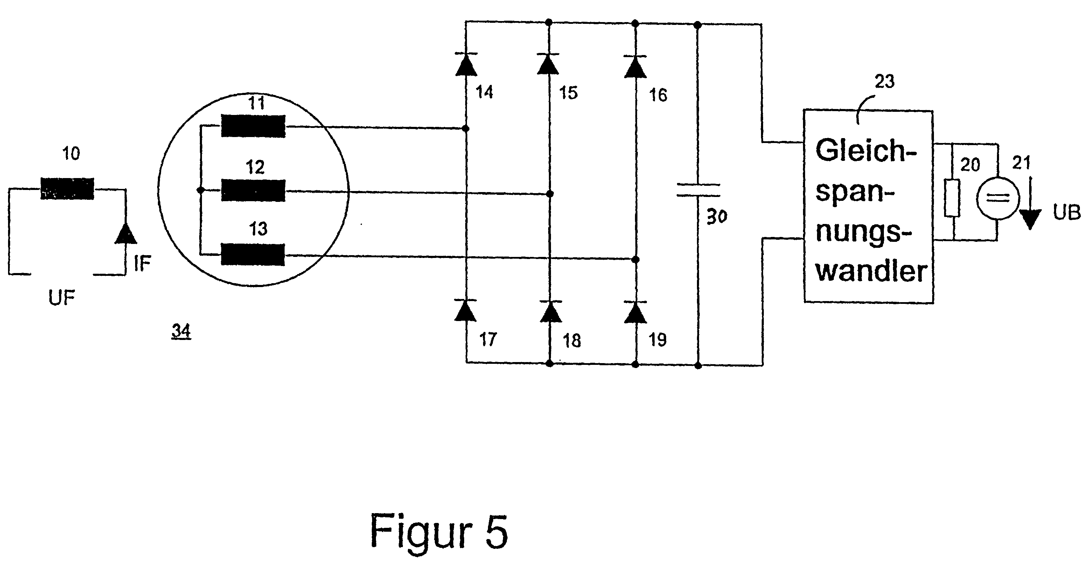

Ein solches bekanntes System ist im übrigen in Figur 5 dargestellt. Es weist neben den Bestandteilen des Systems nach Figur 1 noch zusätzlich den Gleichspannungswandler 23 sowie den Kondensator 24 auf. Die aus der DE-P 196 460 43 bekannte Vorrichtung zur Spannungsversorgung hat anstelle einer rein passiven Diodengleichrichterbrücke einen Pulswechselrichter mit 6 Pulswechselrichterelementen, die mit Hilfe einer elektronischen Einrichtung ansteuerbar sind. Bezüglich der Steuer- bzw. Regelstrategie werden in der DE-P 196 460 43 lediglich Hinweise gegeben, daß die Spannung auch im Generatorbetrieb in gewissen Grenzen an die Erfordernisse anpaßbar ist, indem geeignete Ansteuerungen der Pulswechselrichter erfolgen.

Aus der DE-OS 37 43 317 ist ein Fahrzeugbordnetzsystem bekannt, mit einem Generator, der vom Fahrzeugmotor angetrieben wird. Der Generator, ein Drehstromgenerator mit einstellbarem Erregerfeld, der auch als Starter dienen soll, wird mit Hilfe von Pulswechselrichterelementen mit den Verbrauchern und der Batterie in Verbindung gebracht. Die Pulswechselrichterelemente liegen dabei zwischen den Statorspulen des Generators und den Verbrauchern bzw. der Batterie und richten im Betrieb die vom Generator abgegebene Spannung gleich. Wird der Generator als Starter betrieben, wird er aus der Batterie mit Spannung versorgt. Zusätzlich ist ein Gleichspannungszwischenkreis mit einem bidirektionalen Wandler vorhanden, der im Normalfall eine höhere Ausgangsspannung des Generators erlaubt und im Startfall überbrückt wird. Mit dieser Schaltung ist es möglich, die Ausgangsspannung des Generators zu erhöhen und so eine optimale Generatorauslegung zu erzielen, die kleinere Ströme benötigt als andere Generatoren wie sie beispielsweise aus der DE-PS 33 13 398 bekannt sind.

Vorteile der Erfindung

Das erfindungsgemäße Verfahren zur Regelung eines Generators mit den Merkmalen des Anspruchs 1 hat gegenüber den aus dem Stand der Technik bekannten Lösungen den Vorteil, daß die Leistungsabgabe des Generators im Bereich kleiner Drehzahlen deutlich erhöht wird, ohne daß die Leistungsfähigkeit bei höheren Drehzahlen beeinträchtigt wird.

Erzielt wird dieser Vorteil, indem bei einem Drehstromgenerator mit Erregerspule und Statorspulen der Statorstrom nach Betrag und Phase abhängig von wählbaren Größen einprägbar ist, wobei die Stromeinprägung mit Hilfe von Pulswechselrichtern erfolgt, die von einer Regeleinrichtung angesteuert werden. Die Stromeinprägung nach Betrag und Phase gegenüber dem Erregerstrom ermöglicht in besonders vorteilhafter Weise eine Betriebsweise, die erlaubt, daß mit Hilfe der Ansteuerung der Pulswechselrichter die Klemmenspannung des Generators frei einstellbar ist, wobei diese Einstellung zwischen der maximal möglichen Klemmenspannung und Null erfolgen kann.

Weitere Vorteile der Erfindung ergeben sich durch die in den Unteransprüchen aufgezeigten Merkmale. Ein entscheidender Vorteil ist, daß bei höheren Spannungen, beispielsweise bei Spannungen, die der doppelten Batteriespannung entsprechen, im Bereich kleiner Drehzahlen besondere Leistungssteigerungen möglich sind. Dabei wird in vorteilhafter Weise die Einschaltdrehzahl, die sich bei Spannungsverdoppelung ebenfalls verdoppeln würde, soweit reduziert, daß der Generator beim Betrieb am Pulswechselrichter entlang der sogenannten Momentengerade erfolgen kann. Die magnetischen Eigenschaften des Generators werden dabei in vorteilhafter Weise nicht beeinflußt.

Als Pulswechselrichter werden in vorteilhafter Weise Leistungs-MOSFETs oder ähnliche Schalter eingesetzt. Diese Bauteile haben vorteilhafterweise eine Inversdiode bereits integriert oder werden für den Gleichrichterbetrieb rückwärts betrieben. Die Erzeugung der Ansteuerimpulse kann in vorteilhafter Weise in einer Regeleinrichtung erfolgen, die mikroprozessorgesteuert arbeitet und auch den Erregerstrom beeinflußt. Der Erregerstrom wird in vorteilhafter Weise aus dem Bordnetz, insbesonders aus der Batterie entnommen.

Zeichnung

Ein Ausführungsbeispiel sowie der Stand der Technik ist in der Zeichnung dargestellt und wird in der Beschreibung näher erläutert. Im einzelnen zeigt Figur 1 eine bekannte Schaltung eines Generators, der Gleichrichterbrücke und wesentlicher Bestandteile des Bordnetzes, in Figur 2 ist ein erfindungsgemäßer Generator einschließlich der Pulswechselrichter dargestellt. Figur 3 zeigt einen Zusammenhang zwischen Ausgangsleistung des Generators und Generatordrehzahl für zwei verschiedene Ausgangsspannungen und Figur 4 zeigt denselben Sachverhalt für zwei verschiedene Ausgangsspannungen, wobei Kennlinien für einen Generator mit passiver Diodenbrücke und für einen Generator mit Wechselrichtern für verschiedene Ausgangsspannungen dargestellt sind. Figur 5 zeigt eine an sich bekannte Schaltungsanordnung eines Drehstromgenerators, wobei zusätzlich ein Zwischenkreiskondensator und ein Gleichspannungswandler vorhanden sind.

Beschreibung des Ausführungsbeispiels

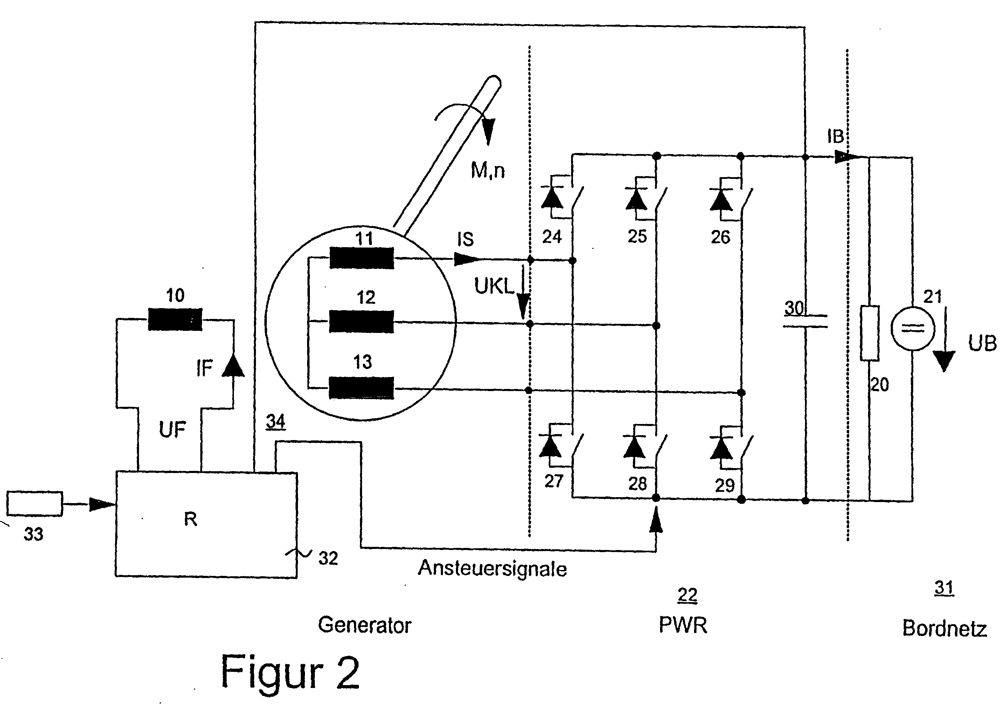

In Figur 2 ist ein Generator sowie die zugehörige Ansteuerschaltung zur Durchführung eines erfindungsgemäßen Verfahrens dargestellt. Der Generator 34 umfaßt wiederum die Erregerspule 10, Statorspulen 11, 12 und 13. Durch die Erreger- bzw. Feldspule 10 fließt der Feldstrom IF. Die an der Erregerspule liegende Spannung ist mit UF bezeichnet.

Der Generator 34 wird von der nicht dargestellten Brennkraftmaschine angetrieben. Die Brennkraftmaschine übt dabei das Moment M aus, das zur Generatordrehzahl n führt. Bei rotierendem Generator geben die Statorspulen den Strom IS ab. Zwischen den Generatorklemmen stellt sich die Klemmenspannung UKL ein, die mit Hilfe des Pulswechselrichters 22 einstellbar ist. Der Pulswechselrichter 22 umfaßt sechs Pulswechselrichterelemente 24 bis 29, die beispielsweise als MOSFET-Schalter ausgestaltet sind. Bei rotierendem Generator wird der für das Bordnetz benötigte Bordnetzstrom IB abgegeben. Die sich einstellende Spannung wird in einem Kondensator 30 zwischengespeichert und gelangt von dort zu den Verbrauchern 20 sowie zur Batterie 21 des Bordnetzes 31.

Die Ansteuerung der Pulswechselrichterelemente 24 bis 29 sowie die Regelung des Feldstromes IF durch die Feld- bzw. Erregerwicklung 10 wird von einer Regeleinrichtung 32 durchgeführt, die beispielsweise einen Mikroprozessor umfaßt, der zugeführte Informationen, zum Beispiel Signale eines Drehzahlsensors 33 auswertet und geeignete Ansteuersignale, zum Beispiel für den Pulswechselrichter abgibt. Über die Regeleinrichtung 32 kann die Batteriespannung UB bzw. eine von der Regeleinrichtung 32 bestimmbare, aus der Batteriespannung UB abgeleitete Spannung UF der Erregerwicklung 10 zugeführt werden. Die Regelstrategie wird im folgenden näher erläutert.

Die Verwendung eines Pulswechselrichters 22 anstatt eines rein passiven Diodengleichrichters ermöglicht, falls die Bordnetzspannung angehoben oder die Windungszahl reduziert wird, die gleiche Leistungserhöhung wie ein Generatorbetrieb bei freier Spannung. Es wird jedoch ein besserer Wirkungsgrad und eine erheblich höhere Leistungsausbeute bei kleiner Generatordrehzahl erzielt.

Bei Verwendung von Dioden in der Gleichrichterbrücke stellt sich der in den Ständerwicklungen fließende Ständerstrom IS und sein Winkel gegenüber dem Erreger- bzw. Feldstrom IF so ein, daß die Klemmenspannung UKL der umgerechneten Bordnetzspannung entspricht. Es gibt jedoch noch eine große Schar anderer Ströme und Winkel, die diese Beziehung ebenfalls erfüllen. Jeder Strom und sein zugehöriger Winkel legen eine bestimmte Klemmenleistung fest. Die Verwendung eines Pulswechselrichters 22 bzw. einer Brückenschaltung aus den Pulswechselrichterelementen 24 bis 29 erlaubt eine Stromeinprägung nach Betrag und Phase, wodurch die erfindungsgemäße Betriebsweise ermöglicht wird. Diese neue Betriebsweise erlaubt es, daß der Pulswechselrichter 22 die Klemmenspannung UKL zwischen der maximal möglichen Klemmenspannung nun frei einstellen kann. Die maximal mögliche Klemmenspannung beträgt bei einem herkömmlichen Bordnetz beispielsweise 14V * $\frac{\Pi}{3}$.

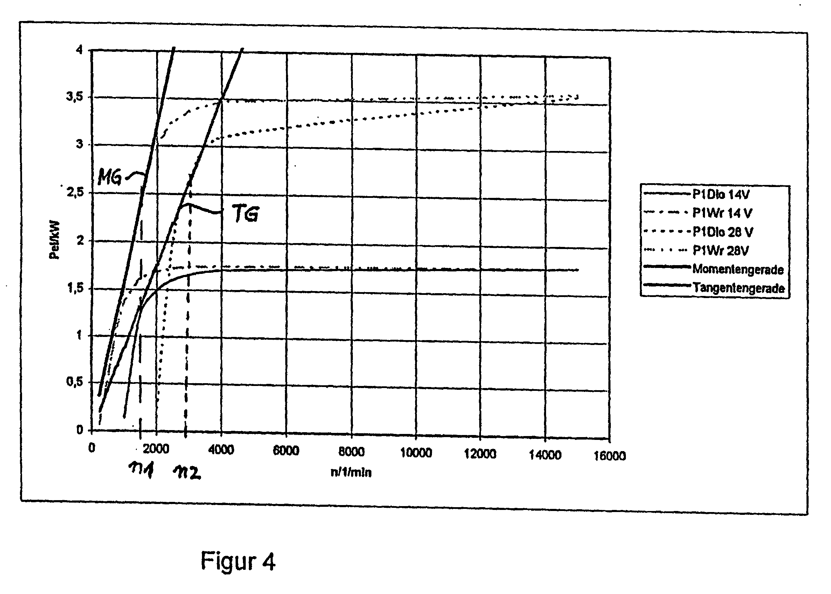

Wird vorausgesetzt, daß der maximal fließende Strangstrom IS bei jeder Drehzahl in den Generator eingeprägt wird, lassen sich folgende Überlegungen bzw. Rechnungen durchführen: Bei sehr kleiner Drehzahl ist die Spannung noch klein, wodurch der Strom so eingeprägt werden kann, daß das für diesen Strom maximale Drehmoment entsteht. Bei symmetrischen Maschinen müssen Feldstrom IF und Statorstrom IS senkrecht aufeinander stehen (90°), bei unsymmetrischen Maschinen ergibt sich das Maximum bei leicht versetzten Winkeln, beispielsweise bei 74°. Das entstehende Drehmoment beträgt 18Nm und ist doppelt so groß wie das Moment am Tangentenpunkt. Dieser Strom wird in der Phasenlage aufrechterhalten, bis die Klemmenspannung ihren Maximalwert erreicht. Der Maximalwert wird am Ende des Grunddrehzahlbereichs, bei Beginn des Feldschwächbereichs erreicht, dies ist beispielsweise bei etwa 770 Umdrehungen/min der Fall. Bei weiterer Drehzahlerhöhung muß der Phasenwinkel des Ständerstroms gegenüber dem Erregerstrom IF erhöht werden, wodurch sich die entstehenden Flüsse gegenseitig aufheben. Die induzierte Spannung kann so konstant gehalten werden. Bei der Drehzahl n1 gibt der Generator dann ca. 1,6kW ab anstatt 1,2kW bei Diodenbetrieb. Je höher die Drehzahl wird, desto mehr gleichen sich die Arbeitspunkte zwischen Diodenbetrieb und Pulswechselrichterbetrieb an. Figur 4 zeigt die entsprechenden Kennlinien, wobei jeweils die Leistung Pe[kW] über der Drehzahl n[1/min] aufgetragen ist, für zwei verschiedene Spannungen und für Betrieb mit Dioden sowie für Betrieb mit Wechselrichtern. Zusätzlich ist die Momentengerade MG und die Tangentengerade TG eingetragen und die Drehzahlen n1, bzw. $n_2$ die die Tangentengerade charakterisieren.

Wie in Figur 4 deutlich wird, ergeben sich beim Betrieb mit Pulswechselrichtern besonders bei kleinen Drehzahlen entscheidende Verbesserungen in der Leistungsabgabe. Die Leistungserhöhung wird besonders deutlich, wenn die Kennlinien bei doppelter Batteriespannung verglichen werden. Im Diodenbetrieb an fester Spannung verdoppelt sich die Einschaltdrehzahl nE, bei der Drehzahl $n_1$ kann der Generator keine Leistung abgeben. Beim Betrieb mit freier Spannung kann entlang der Tangentengerade TG gearbeitet werden. Die maximale Leistungsabgabe bei $n_1$ beträgt 1,2kW. Die Erfindung ermöglicht einen Betrieb entlang der Momentengerade MG. Bei der Drehzahl n1 kann der Generator dann fast 2,5kW abgeben. Für die drei Betriebsweisen ist jeweils derselbe Generator vorausgesetzt. Wie oben erwähnt kann der Effekt einer Leistungssteigerung durch Batteriespannungserhöhung genauso an einfacher Batteriespannung durch Verringerurng der Windungsdrehzahl erzielt werden.

Damit das erfindungsgemäße Verfahren durchgeführt werden kann, ist es erforderlich, daß ein Lage- und Drehzahlgeber 33 vorhanden ist, der die Drehzahl des Generators und/oder der den Generator antreibenden Brennkraftmaschine ermittelt. Diese Drehzahl wird dann in der Regeleinrichtung 32 ausgewertet und bei der Festlegung der Ansteuersignale berücksichtigt. Eine Begrenzung des thermisch zulässigen Maximalstroms dürfte ähnlich sein wie bei herkömmlichen Generatoren. Bei Drehzahlen über 6000 Umdrehungen/min kann gegebenenfalls auf eine herkömmliche Regelung übergegangen werden, da es dann nicht erforderlich ist, den Strom mit dem Pulswechselrichter einzuprägen. In diesem Fall kann durch entsprechende Ansteuerung der Pulswechselrichter auf klassischen Diodenbetrieb übergegangen werden und die Leistung nur durch Beeinflussung des Erregerstroms geregelt werden.

Wie beim Betrieb mit freier Spannung kann der Generator bei ausreichend hoher Betriebsspannung einen Wirkungsgrad von bis zu 80% erreichen. Der Wirkungsgrad des Pulswechselrichters wird vornehmlich durch die Schalter bestimmt. Zusammen mit gegebenenfalls auftretenden Leitverlusten in den Schaltern dürfte ein Gesamtwirkungsgrad von deutlich über 70% erreichbar sein. Durch die Pulswechselrichter wird die Spannung stabilisiert, so daß eine weitere Elektronikstufe zur Spannungskonstanthaltung bzw. Spannungswandlung nicht erforderlich ist und damit auch zu keinen weiteren Verlusten führt. Bei hohen Drehzahlen kann der Pulswechselrichter ohnehin als Diodenbrücke betrieben werden, wodurch sich dann die Verluste auf die Diodenleitverluste reduzieren.

Da der beschriebene Generator mit Pulswechselrichtern funktionell einem hochdynamischen Servoantrieb entspricht, kann die Leistung auch hochdynamisch beeinflußt werden. Eine entsprechende Reglerauslegung der Regeleinrichtung, die die Pulswechselrichterelemente ansteuert, wird es ermöglichen, den Lastabwurf mit deutlich kleineren Überspannungen zu bewältigen als dies bei herkömmlichen Generatoren sowie herkömmlichen Spannungsreglern der Fall ist.

Durch den Einsatz des Pulswechselrichterkonzepts wird auch ein Motorbetrieb ermöglicht, es kann also der Generator als Motor, beispielsweise Startermotor eingesetzt werden. Das oben genannte Moment von 18Nm kann genauso im Motorbetrieb erzeugt werden. Bei kurzzeitigem Überstrom ist eine Überlastung von 50 bis 100% erreichbar. Ein solches Drehmoment kann als Synchronisierhilfe beim Schalten von Getrieben oder bei entsprechender Übersetzung auch zum Starten von Verbrennungsmotoren eingesetzt werden.

Ebenso können ein Generatorbetrieb durch kurzzeitige Überlastung auch Betriebspunkte auf Geraden erreicht werden, die noch steiler als die Momentengerade für Dauerkurzschlußstrom sind. Diese Überlastung kann den Ständer wie auch den Erregerkreis betreffen. Bei Betrieb im Überlastzustand könnten Temperaturmessungen an besonders kritischen Stellen des Gesamtsystems durchgeführt werden und eine Beendigung der Überlastung beim Erreichen kritischer Temperaturen durch Abgabe geeigneter Ansteuersignale von der Regeleinrichtung ausgelöst werden.

**Patentansprüche**

1. Verfahren zur Regelung eines von einer Brennkraftmaschine antreibbaren Generators (34), insbesonders eines Drehstromgenerators in einem Kraftfahrzeug, mit einer Erregerspule (10), durch die der regelbare Erregerstrom (IE) fließt, zur Erzeugung des Erregerfeldes und mit Statorspulen (11, 12, 13), in denen durch Flußänderungen eine Wechselspannung induziert wird, wobei die Statorspulen (11, 12, 13) über wenigstens einen Pulswechselrichter (22) mit den Verbrauchern (20) in Verbindung stehen, **dadurch gekennzeichnet, daß** die Statorströme (IS) durch eine von einer Regeleinrichtung (32) erzeugte Ansteuerung des Pulswechselrichters (22) nach Betrag und Phase abhängig von wählbaren Größen einprägbar sind.

2. Verfahren nach Anspruch 1, **dadurch gekennzeichnet, daß** die Einprägung der Statorströme (IS) nach Betrag und Phase bezogen auf den Erregerstrom (IE) erfolgt und der Erregerstrom (IE) von der Regeleinrichtung (32) abgegeben und in der Höhe geregelt wird.

3. Verfahren nach Anspruch 1 oder 2, **dadurch gekennzeichnet, daß** die Stromeinprägung so erfolgt, daß die Klemmenspannung (UKL) zwischen einer maximal möglichen Klemmenspannung und Null frei einstellbar ist.

4. Verfahren nach einem der vorhergehenden Ansprüche, **dadurch gekennzeichnet, daß** ein Mikroprozessor der Regeleinrichtung (32) die Stromeinprägung abhängig von zuführbaren Größen festlegt.

5. Verfahren nach einem der vorhergehenden Ansprüche, **dadurch gekennzeichnet, daß** die Ansteuerung der Pulswechselrichterelemente (24 - 29) des Pulswechselrichters (22) zur Stromeinprägung so erfolgt, daß sich eine Generatorspannung einstellt, die etwa 14 Volt oder 28 Volt beträgt.

6. Verfahren nach einem der vorhergehenden Ansprüche, **dadurch gekennzeichnet, daß** ein Statorstrom IS eingeprägt wird, der das für diesen Strom (IS) maximale Drehmoment unter Berücksichtigung der maximalen Spannung liefert und bei höheren Drehzahlen (11), insbesonders nachdem die Klemmenspannung (UKL) ihren Maximalwert erreicht, ein Strom (IS)eingeprägt wird, der zu einer Feldschwächung führt.

7. Verfahren nach einem der vorhergehenden Ansprüche, **dadurch gekennzeichnet, daß** die Ansteuerung der Pulswechselrichterelemente (24 - 29) des Pulswechselrichters (22) oberhalb einer vorgebbaren Drehzahl so erfolgt, daß die Wirkung der Pulswechselrichterelemente (24 - 29) der Wirkung von Dioden entspricht.

8. Verfahren nach einem der vorhergehenden Ansprüche, **dadurch gekennzeichnet, daß** die Ansteuerung der Pulswechselrichterelemente (24-29) des Pulswechselrichters (22) zumindest zeitweilig so erfolgt, daß der Generator (34) im Motorbetrieb arbeitet, wobei er ein Drehmoment (M) erzeugt und zum Starten von Verbrennungsmotoren oder als Synchronisierhilfe beim Schalten von Getrieben oder als Servoantrieb einsetzbar ist.

9. Verfahren nach einem der vorhergehenden Ansprüche, **dadurch gekennzeichnet, daß** zumindest eine kurzzeitige Überlastung im Motor- oder im Generatorbetrieb zugelassen wird, wobei die Regeleinrichtung (32) entsprechende Ansteuersignale an den Pulswechselrichter (22) abgibt, die zu einem Überstrom führen.

10. Verfahren nach Anspruch 9, **dadurch gekennzeichnet, daß** der Betrieb im überlasteten Bereich von der Regeleinrichtung (32) beendet wird, sofern kritische Betriebszustände auftreten, insbesonders eine thermische Überlastung.

11. Verfahren nach einem der vorhergehenden Ansprüche, **dadurch gekennzeichnet, daß** der Generator (34) zumindest zeitweilig als Motor betrieben wird, wobei das erforderliche Motormoment (M) durch Ansteuerung des Pulswechselrichters (22)erzeugt wird.

12. Vorrichtung zur Regelung eines von einer Brennkraftmaschine antreibbaren Generators (34), insbesonders eines Drehstromgenerators in einem Kraftfahrzeug, mit einer Erregerspule (10), durch die der von einer Regeleinrichtung (32) regelbare Erregerstrom (IE) fließt, zur Erzeugung des Erregerfeldes und mit Statorspulen (11, 12, 13), in denen durch Flußänderungen eine Wechselspannung induziert wird, wobei die Statorspulen (11, 12, 13) über wenigstens einen Pulswechselrichter (22) mit den Verbrauchern (20) in Verbindung stehen, **dadurch gekennzeichnet, daß** die Regeleinrichtung (32) Ansteuermittel umfaßt, die mit dem Pulswechselrichter (22) in Verbindung stehen und die Statorströme (IS) abhängig von wählbaren Größen nach Betrag und Phase einprägen.

13. Vorrichtung nach Anspruch 12, **dadurch gekennzeichnet, daß** der Pulswechselrichter (22) als ansteuerbare Pulswechselrichterelemente (24-29) Leistungs-MOSFETs umfaßt, die mit der Regeleinrichtung (32)in Verbindung stehen und eine integrierte Inversdiode aufweisen.

14. Vorrichtung nach Anspruch 12 oder 13, **dadurch gekennzeichnet, daß** die Regeleinrichtung (32) Bestandteil des Steuergerätes der Brennkraftmaschine oder eines Spannungsreglers ist und wenigstens einen Mikroprozessor umfaßt.

**Claims**

1. Method for regulating a generator (34) which can be driven by an internal combustion engine, in particular a three-phase generator in a motor vehicle, having an exciter coil (10), through which the exciter current (IE) which can be regulated flows, for generating the exciter field, and having stator coils (11, 12, 13) in which an A.C. voltage is induced by changes in flux, the stator coils (11, 12, 13) being connected to the loads (20) via at least one pulse-controlled inverter (22), **characterized in that** the stator currents (IS) can be impressed as a function of selectable variables in terms of absolute value and phase by actuation of the pulse-controlled inverter (22) which is generated by a regulator (32).

2. Method according to Claim 1, **characterized in that** the stator currents (IS) are impressed with respect to the exciter current (IE) in terms of absolute value and phase, and the exciter current (IE) is output, and regulated in terms of its magnitude, by the regulator (32).

3. Method according to Claim 1 or 2, **characterized in that** the impression of the current is carried out in such a way that the terminal voltage (UKL) is freely adjustable between a maximum possible terminal voltage and zero.

4. Method according to one of the preceding claims, **characterized in that** a microprocessor of the regulator (32) defines the impression of the current as a function of variables which can be supplied.

5. Method according to one of the preceding claims, **characterized in that** the actuation of the pulse-controlled inverter elements (24 - 29) of the pulse-controlled inverter (22) for the impression of the current is carried out in such a way that a generator voltage which is approximately 14 volts or 28 volts is set.

6. Method according to one of the preceding claims, **characterized in that** a stator current (IS) is impressed which supplies the maximum torque for this current (IS) taking into account the maximum voltage, and at relatively high rotational speeds (11), in particular after the terminal voltage (UKL) has reached its maximum value, a current (IS) which leads to field attenuation is impressed.

7. Method according to one of the preceding claims, **characterized in that** the actuation of the pulse-controlled inverter elements (24 - 29) of the pulse-controlled inverter (22) is carried out above a predefinable rotational speed in such a way that the effect of the pulse-controlled inverter elements (24 - 29) corresponds to the effect of diodes.

8. Method according to one of the preceding claims, **characterized in that** the actuation of the pulse-controlled inverter elements (24 - 29) of the pulse-controlled inverter (22) is carried out at least temporarily in such a way that the generator (34) operates in the motor mode, said generator (34) generating a torque (M) and being capable of being used to start internal combustion engines or as a synchronization aid when changing gears or as a servodrive.

9. Method according to one of the preceding claims, **characterized in that** at least brief overloading is permitted in the motor mode or in the generator mode, the regulator (32) outputting corresponding actuation signals to the pulse-controlled inverter (22) which give rise to an overcurrent.

10. Method according to Claim 9, **characterized in that** the operation in the overloaded range is terminated by the regulator (32) if critical operating states occur, in particular thermal overloading.

11. Method according to one of the preceding claims, **characterized in that** the generator (34) is operated at least temporarily as a motor, the necessary motor torque (M) being generated by actuating the pulse-controlled inverter (22).

**12.** Device for regulating a generator (34) which can be driven by an internal combustion engine, in particular a three-phase generator in a motor vehicle, having an exciter coil (10), through which the exciter current (IE) which can be regulated by a regulator (32) flows, for generating the exciter field and having stator coils (11, 12, 13) in which an A.C. voltage is induced by changes in flux, the stator coils (11, 12, 13) being connected to the loads (20) via at least one pulse-controlled inverter (22), **characterized in that** the regulator (32) comprises actuation means which are connected to the pulse-controlled inverter (22) and impress the stator currents (IS) as a function of selectable variables in terms of absolute value and phase.

**13.** Device according to Claim 12, **characterized in that** the pulse-controlled inverter (22) comprises power MOSFETs as pulse-controlled inverter elements (24 - 29) which can be actuated, said power MOSFETs being connected to the regulator (32) and having an integrated inverse diode.

**14.** Device according to Claim 12 or 13, **characterized in that** the regulator (32) is a component of the controller of the internal combustion engine or of a voltage regulator and comprises at least one microprocessor.

**Revendications**

**1.** Procédé de régulation d'un générateur (34) entraîné par un moteur à combustion interne, notamment d'un alternateur de courant alternatif dans un véhicule automobile comprenant une bobine d'excitation (10) traversée par un courant d'excitation réglable (IE) pour générer le champ d'excitation et des bobines de stator (11, 12, 13) dans lesquelles on induit une tension alternative par des variations de flux,
les bobines de stator (11, 12, 13) étant reliées aux consommateurs (20) par au moins un redresseur impulsionnel (22),
**caractérisé en ce qu'**
on impose les courants de stator (IS) par une commande générée par une installation de régulation (32) du redresseur impulsionnel (22), en amplitude et en phase en fonction de grandeurs choisies.

**2.** Procédé selon la revendication 1,
**caractérisé en ce qu'**
on impose les courants de stator (IS) en amplitude et en phase par rapport au courant d'excitation (IE) et l'installation de régulation (32) fournit le courant d'excitation (IE) que l'on règle en intensité.

**3.** Procédé selon Tune quelconque des revendications 1 ou 2,
**caractérisé en ce qu'**
on impose le courant en réglant librement la tension de borne (UKL) entre une tension de borne maximale possible et une tension nulle.

**4.** Procédé selon Tune quelconque des revendications précédentes,
**caractérisé en ce qu'**
un microprocesseur de l'installation de régulation (32) fixe le courant imposé en fonction des grandeurs fournies.

**5.** Procédé selon Tune quelconque des revendications précédentes,
**caractérisé en ce qu'**
on commande les éléments redresseurs impulsionnels (24-29) du redresseur impulsionnel (22) pour imposer le courant de façon à obtenir une tension de générateur qui est soit de 14 volts soit de 28 volts.

**6.** Procédé selon Tune quelconque des revendications précédentes,
**caractérisé en ce qu'**
on impose un courant de stator (IS) qui fournit pour ce courant (IS), le couple maximum en tenant compte de la tension maximale et pour des vitesses de rotation plus élevées (11), notamment après que la tension de borne (UKL) ait atteint sa valeur maximale, on impose un courant (IS) qui affaiblit le champ.

**7.** Procédé selon l'une quelconque des revendications précédentes,
**caractérisé en ce qu'**
on commande les éléments redresseurs impulsionnels (24-29) du redresseur impulsionnel (22) au-dessus dune vitesse de rotation prédéterminée pour que l'effet des éléments redresseurs impulsionnels (24-29) corresponde à l'effet des diodes.

**8.** Procédé selon l'une quelconque des revendications précédentes,
**caractérisé en ce que**
la commande des éléments redresseurs impulsionnels (24-28) du redresseur impulsionnel (22) se fait au moins de temps en temps pour que le générateur (34) fonctionne en mode moteur et génère un couple (M) utilisable pour démarrer le moteur à combustion interne ou pour assister la synchronisation lors de la commutation de boîtes de vitesses ou encore comme entraînement asservi.

**9.** Procédé selon l'une quelconque des revendications précédentes,
**caractérisé en ce qu'**
on autorise au moins une surcharge de courte durée en mode moteur ou en mode générateur et l'installation de régulation (32) émet des signaux de commande correspondant au redresseur impulsionnel (22) conduisant à une surintensité.

10. Procédé selon la revendication 9,
**caractérisé en ce que**
le fonctionnement dans la plage de surcharge est terminé par l'installation de régulation (32) lorsque se produisent des états de fonctionnement critiques, notamment une surcharge thermique.

11. Procédé selon Tune quelconque des revendications précédentes,
**caractérisé en ce que**
le générateur (34) fonctionne au moins de temps à autre comme moteur et génère le couple moteur nécessaire (M) par la commande du redresseur impulsionnel (22).

12. Dispositif de régulation d'un générateur (34) entraîné par un moteur à combustion interne, notamment d'un alternateur de courant triphasé dans un véhicule automobile, comportent une bobine d'excitation (10) traversée par le courant d'excitation (IE) réglé par une installation de régulation (32) pour générer le champ d'excitation et des bobines de stator (11, 12, 13), dans lequel on induit une tension alternative par des variations de flux, les bobines de stator (11, 12, 13) étant reliées aux consommateurs (20) par au moins un redresseur impulsionnel (22),
**caractérisé en ce que**
l'installation de régulation (32) comprend des moyens de commande reliés au redresseur impulsionnel (22) et impose les courants de stator (IS) en amplitude et en phase en fonction de grandeurs sélectionnées.

13. Dispositif selon la revendication 12,
**caractérisé en ce que**
le redresseur impulsionnel (22) comprend comme éléments redresseurs impulsionnels (24-29) des transistors MOSFET de puissance reliés à l'installation de régulation (32) et ayant une diode inverse intégrée.

14. Dispositif selon Tune quelconque des revendications 12 ou 13,
**caractérisé en ce que**
l'installation de régulation (32) fait partie de l'appareil de commande du moteur à combustion interne ou d'un régulateur de tension et comprend au moins un microprocesseur.

Figur 1

EP 0 999 953 B1

Figur 2

EP 0 999 953 B1

Figur 3

Figur 4

Figur 5

EP 0 999 953 B1